# EUROPÄISCHE PATENTANMELDUNG

(11) **EP 1 862 234 A2**
(43) Veröffentlichungstag der Anmeldung: **05.12.2007**
(21) Anmeldenummer: 07109389.2
(22) Anmeldetag: 01.06.2007
(51) Int. Cl.: B21D 5/08, B21C 37/16

(54) **Vorrichtung zum Formen von Hohlprofilen**

(30) Priorität: 03.06.2006 DE 102006026136
(71) Anmelder: Hans Franke KG, 99326 Stadtim (DE)
(72) Erfinder: Fleischmann, Heiko, 99887, Georgenthal (DE); Wenke, Ronald, 99887, Georgenthal (DE); Reichstein, Dirk, 99867, Gotha (DE); Franke, Hans, 99326, Ilmthal (DE)
(74) Vertreter: Liedtke, Klaus

(57) **Zusammenfassung**

Die Erfindung betrifft eine Vorrichtung zum Formen von Hohlprofilen (5), umfassend ein Formwerkzeug, das einen länglichen Formkörper (2), dessen Querschnittsfläche und/oder Querschnittsform entlang einer Längsachse variiert und einen einen Abschnitt des Formkörpers (2) umgreifenden Formkopf (10) mit mindestens zwei Formrollen (3) zum Biegen eines entlang einer Mantellinie des Formkörpers (2) zuführbaren Blechstreifens (1) um den Formkörper (2) aufweist, wobei der Formkopf (10) und/oder der Formkörper (2) so beweglich ausgebildet sind, dass eine Relativbewegung des Formkopfes (10) in Richtung der Längsachse ausführbar ist und wobei die Formrollen (3) jeweils eine tangential zum Formkörper (2) liegende Achse aufweisen, deren Abstand zur Längsachse entsprechend der Querschnittsfläche und/oder Querschnittsform des Abschnittes des Formkörpers (2), den der Formkopf (10) umgreift, veränderlich ist, und wobei die Formrollen (3) jeweils eine Kraft in Richtung zum Formkörper (2) ausüben, weiter umfassend eine Vorschubeinheit (9) zum Vorschub des Blechstreifens (1) und ein den Formrollen (3) in Vorschubrichtung (6) des Blechstreifens (1) nachgeordnetes Schweißgerät (4), mit dem die Ränder des gebogenen Blechstreifens (1) verschweißbar sind, wobei das Schweißgerät (4) die dabei entstehende Schwei-βung überwacht und wobei die Vorschubgeschwindigkeit (Vᵥ) der Vorschubeinheit (9) in Abhängigkeit von der Abweichung zu einer vorgegebenen Sollqualität (Qₛ) steuerbar ist und wobei die Bewegung des Formkopfes (10) und/oder des Formkörpers (2) steuerbar ist.

## Beschreibung

Die Erfindung betrifft eine Vorrichtung zum Formen von Hohlprofilen.

Zum Formen von Hohlprofilen, insbesondere mit in Längsausdehnung verändertem Querschnitt, wie z.B. Metallmasten für Vergnügungswasserfahrzeuge oder Tragmasten für die Freiluftinstallation von Beleuchtungseinrichtungen und ähnlichem ist aus der DE 2319819 ein Verfahren und eine Formmaschine bekannt. Das Hohlprofil wird dabei aus einem Blechstreifen geformt, indem dieser entlang einer Mantellinie eines Formeisens verschoben wird, dessen Querschnitt sich entlang dieser Mantellinie in bestimmter Weise durch eine Abnahme der Abmessungen fortschreitend ändert und indem der Blechstreifen während seiner Vorwärtsbewegung zunehmend um das Formeisen beidseitig der Mantellinie mittels einer geeigneten Andrückeinrichtung herumgedrückt wird, so dass er die Kontur und die Abmessungen des Formeisens an der Stelle erhält, wo die Andrückeinrichtung wirkt. Der Angriffspunkt der Andrückeinrichtung wird dabei entlang dem Formeisen verschoben, so dass ein gewünschter Querschnitt geformt wird. Dem Formkopf ist in Vorschubrichtung des Blechstreifens ein Schweißgerät nachgeordnet, mit dem die Kanten des gebogenen Blechstreifens miteinander verschweißt werden. Problematisch ist dabei, dass das Schweißgerät der vorgegebenen Vorschubgeschwindigkeit folgen muss. Da die Qualität einer Schweißung außer vom Schweißverfahren auch von zeitlich veränderlichen Parametern abhängt, deren Einfluss durch langsameres Schweißen verringert werden kann, kann keine gleichförmige Qualität der Schweißung sichergestellt werden, sofern der Gesamtvorgang nicht durch Bedienungspersonal überwacht und entsprechend in den Ablauf eingegriffen wird.

Der Erfindung liegt die Aufgabe zu Grunde, eine verbesserte Vorrichtung zum Formen von Hohlprofilen anzugeben, die eine gleichförmig hohe Qualität der Schweißung ermöglicht.

Die Aufgabe wird erfindungsgemäß gelöst durch eine Vorrichtung nach Anspruch 1.

Vorteilhafte Ausgestaltungen der Erfindung sind Gegenstand der Unteransprüche.

Eine erfindungsgemäße Vorrichtung zum Formen von Hohlprofilen umfasst eine Vorschubeinheit zum Vorschub eines Blechstreifens und ein Formwerkzeug, in dem der Blechstreifen zu einem Hohlprofil gebogen wird. Das Formwerkzeug weist einen länglichen Formkörper und einen Formkopf auf. Die Querschnittsfläche und/oder Querschnittsform des Formkörpers variiert entlang einer Längsachse. Der Formkopf umgreift einen Abschnitt des Formkörpers und weist mindestens zwei Formrollen zum Biegen des entlang einer Mantellinie des Formkörpers zuführbaren Blechstreifens um den Formkörper auf. Der Formkopf und/oder der Formkörper sind so beweglich ausgebildet, dass eine Relativbewegung des Formkopfes in Richtung der Längsachse ausführbar ist. Auf diese Weise erhält das Hohlprofil an der gerade im Formkopf befindlichen Stelle die Querschnittsform des Formkörpers an der Stelle, an der er gerade vom Formkopf umgriffen wird, so dass die Querschnittsfläche des Hohlprofils in einem Intervall variieren kann, das von der kleinsten und der größten Querschnittsfläche des Formkörpers vorgegeben ist. Die Formrollen weisen jeweils eine tangential zum Formkörper liegende Achse auf, deren Position zur Längsachse entsprechend der Querschnittsfläche und/oder Querschnittsform des Abschnittes des Formkörpers, den der Formkopf umgreift, veränderlich ist. Die Formrollen üben jeweils eine Kraft in Richtung zum Formkörper aus. Diese Kraft kann beispielsweise von einer vorgespannten Feder ausgeübt werden. Auf diese Weise wird der Blechstreifen immer an den Formkörper angepresst. Die Vorrichtung umfasst weiter ein den Formrollen in Vorschubrichtung des Blechstreifens nachgeordnetes Schweißgerät, mit dem die Ränder des gebogenen Blechstreifens verschweißbar sind. Das Schweißgerät überwacht die Istqualität einer dabei entstehenden Schweißung. Eine Vorschubgeschwindigkeit der Vorschubeinheit ist in Abhängigkeit von der Istqualität und einer vorgegebenen Sollqualität steuerbar. Damit ist ein vollautomatisiertes Schweißen möglich, bei dem das Schweißgerät die Arbeitsgeschwindigkeit vorgibt, so dass die Qualität der Schweißung, d.h. einer Schweißnaht oder von Schweißpunkten, sichergestellt ist, ohne dass dafür permanente Überwachung und Korrektur durch Bedienungspersonal erforderlich ist. Die Überwachung der Istqualität der Schweißung kann auf verschiedene Weise erfolgen. Bei Schweißverfahren mittels abschmelzender Elektroden kann beispielsweise der Schweißstrom als Qualitätskriterium überwacht werden. Andere Einrichtungen zur Schweißnahtverfolgung, die beispielsweise optisch arbeiten, sind am Markt verfügbar. Die Bewegung des Formkopfes und/oder des Formkörpers, d.h. die Relativbewegung zwischen beiden, ist ebenfalls steuerbar, um eine gewünschte Querschnittsform des Hohlprofils zu erreichen. Im Allgemeinen ist dabei der Formkörper oder der Formkopf fixiert, während das jeweils andere Teil beweglich ist. Am einfachsten ist die Steuerung der Bewegung, wenn der Formkörper fixiert und der Formkopf beweglich ist.

Vorzugsweise ist der Formkörper so ausgebildet, dass sich der Querschnitt zumindest eines Bereiches des Formkörpers gleichförmig zu einem Ende des Formkörpers hin verjüngt. Beispielsweise kann sich ein Bereich des Formkörpers konisch an einen zylindrischen Bereich anschließen. Denkbar ist beispielsweise auch, dass ein Bereich des Formkörpers sich in Form eines Pyramidenstumpfes an einen prismatischen Bereich anschließt. Auf diese Weise lässt sich die Querschnittsform des Hohlprofils vorgeben.

In einer bevorzugten Ausführungsform weist der Formkopf vier Formrollen auf, wodurch insbesondere dickere Bleche aus Stahlblech besser verformbar sind als mit nur zwei Rollen.

In einer besonders bevorzugten Ausführungsform sind mindestens zwei voneinander beabstandete Ebenen vorgesehen, in denen jeweils mindestens eine Achse einer Formrolle liegt. Der Blechstreifen passiert auf diese Weise während des Vorschubs zunächst eine erste Ebene mit beispielsweise einer Formrolle, die zum Beispiel in der Mitte des Blechstreifens liegt und den Formvorgang beginnt. Der nun bereits vorgeformte Blechstreifen passiert die zweite Ebene mit beispielsweise zwei gegenüberliegenden und zur Formrolle der ersten Ebene 90 ° versetzten Formrollen, die den Blechstreifen weiter um den Formkörper herum biegen. In einer dritten Ebene liegt beispielsweise eine vierte Formrolle, die gegenüber der Formrolle der ersten Ebene um 180 ° versetzt ist und den Biegevorgang abschließt.

Vorzugsweise weisen die Formrollen ein konkaves Profil auf. Auf diese Weise lässt sich der Blechstreifen besonders einfach um den Formkörper biegen.

Bevorzugt ist dabei der Radius des konkaven Profils annähernd dem kleinsten Radius des Formkörpers gleich, so dass die Formrollen den Blechstreifen an der Stelle des kleinsten Radius des Formkörpers optimal anpressen.

In einer besonders bevorzugten Ausführungsform sind die Formrollen jeweils aus mindestens zwei Rollenteilen gebildet, die eine Form aufweisen, wie sie sich beim Querschneiden einer einteiligen Rolle ergeben würde und dass die Rollenteile axial zueinander beweglich sind. Auf diese Weise lässt sich die Basis, auf der die Formrollen den Blechstreifen andrücken, dynamisch verbreitern, so dass der Biegevorgang auch im Bereich größerer Radien des Formkörpers verbessert wird. Beispielsweise kann eine Formrolle durch einen Querschnitt halbiert sein. Greift die Formrolle am geringsten Radius des Formkörpers an, berühren sich die beiden Rollenteile an der Schnittstelle. Bei größeren Radien des Formkörpers rücken die beiden Rollenteile zunehmend auseinander und passen sich damit nahezu formschlüssig an den größeren Querschnitt an, wodurch der Biegevorgang erheblich verbessert wird.

Bevorzugt sind die Rollenteile mittels Federkraft axial gegeneinander vorgespannt, so dass sich der axiale Abstand der Rollenteile selbsttätig an den Querschnitt des Formkörpers anpasst.

Alternativ können die Rollenteile auch aktiv beweglich sein, wodurch sich die Andruckkraft der Rollenteile in Richtung des Formkörpers besser dosieren lässt.

In einer bevorzugten Ausführungsform ist das Schweißgerät als Laserschweißgerät ausgebildet. Laserschweißgeräte erlauben eine besonders hohe Arbeitsgeschwindigkeit und bieten eine besonders hohe Qualität der Schweißnähte. Des Weiteren ist beim Schweißen mit Laserschweißgeräten kein Zusatzstoff (Elektrode etc.) notwendig. Zudem erlaubt Laserschweißen auch das Schweißen verzinkter Bleche ohne dass ein Nachverzinken der Nähte erforderlich ist. Dadurch entfällt auch das sonst notwendige nachträgliche Richten der Hohlprofile, da das nachträgliche Verzinken bei 600 bis 700 °C stattfindet und plastische Verformungen verursacht.

Vorzugsweise ist das Schweißgerät oberhalb des gebogenen Blechstreifens angeordnet ist und der Blechstreifen wird unterhalb des Formkörpers zugeführt. Auf diese Weise kann von oben geschweißt werden, so dass die Funktion des Schweißgerätes nicht durch während des Schweißens herabfallende oder herabtropfende Partikel beeinträchtigt werden kann.

In einer bevorzugten Ausführungsform ist in Vorschubrichtung vor dem Schweißgerät eine Schneidvorrichtung angeordnet, die überschüssiges Blech abschneidet. Auf diese Weise können für die Herstellung der Hohlprofile standardisierte Blechstreifen auch von der Rolle verwendet werden. Alternativ müsste der Blechstreifen entsprechend dem gewünschten Profil zugeschnitten sein, bevor er geformt wird.

In einer besonders bevorzugten Ausführungsform unterstützt der Formkopf die Vorschubbewegung aktiv. Damit können auch relativ dünne Bleche umgeformt werden, die aufgrund des großen Widerstands, den der Formkopf dem Vorschub infolge der Umformung entgegensetzt, ansonsten die Bestrebung hätten sich ähnlich einem Papierstau in einem Drucker vor dem Formkopf zu stauen und unkontrolliert aufzufalten.

Zu diesem Zweck können beispielsweise die Formrollen aktiv angetrieben sein. Beispielsweise können die Formrollen eine Beschichtung aus einem Material mit einem hohen Haftreibungskoeffizienten aufweisen oder aus einem solchen Material bestehen. Der Formkörper sollte dann einen möglichst niedrigen Haftreibungskoeffizienten haben, damit der Blechstreifen möglichst mühelos daran entlanggleitet, beispielsweise indem er aus poliertem Stahl gefertigt ist.

In einer bevorzugten Ausführungsform ist eine Steuereinheit vorgesehen, die die Relativbewegung des Formkopfes zum Formkörper als Funktion der Vorschubgeschwindigkeit und der Zeit steuert. Auf diese Weise lassen sich reproduzierbar Hohlprofile mit einer gewünschten Profilform herstellen. Besteht beispielsweise ein linearer Zusammenhang zwischen der Vorschubgeschwindigkeit des Blechstreifens und der Zustellgeschwindigkeit des Formkopfes zum Formkörper, lässt sich ein Hohlprofil mit nahezu beliebiger Konizität herstellen. Die Steuereinheit kann außerdem die oben erwähnte Anpassung der Vorschubgeschwindigkeit an die Erfordernisse des Schweißgerätes übernehmen.

Bevorzugt ist der Formkopf auf dem Formkörper selbstzentrierend ausgeführt, um eine aufwändige Präzisionsführung zu vermeiden.

Ein Ausführungsbeispiel der Erfindung wird im Folgenden anhand von Zeichnungen näher erläutert.

Darin zeigen:
- Figur 1: ein Blockschaltbild einer Steuerung einer Vorrichtung zum Formen von Hohlprofilen
- Figur 2: eine schematische Teilseitenansicht einer Vorrichtung zum Formen von Hohlprofilen mit einem Blechstreifen im ersten Stadium eines Formvorganges,
- Figur 3: eine schematische Teilseitenansicht einer Vorrichtung zum Formen von Hohlprofilen mit einem Blechstreifen im zweiten Stadium eines Formvorganges,
- Figur 4: eine schematische Teilseitenansicht einer Vorrichtung zum Formen von Hohlprofilen mit einem Blechstreifen im dritten Stadium eines Formvorganges,
- Figur 5: eine schematische Teilseitenansicht einer Vorrichtung zum Formen von Hohlprofilen mit einem Blechstreifen im vierten Stadium eines Formvorganges,
- Figur 6: eine schematische Teilseitenansicht einer Vorrichtung zum Formen von Hohlprofilen mit einem Blechstreifen im fünften Stadium eines Formvorganges und
- Figur 7: eine schematische Teilseitenansicht einer Vorrichtung zum Formen von Hohlprofilen mit einem fertigen Hohlprofil.

Einander entsprechende Teile sind in allen Figuren mit den gleichen Bezugszeichen versehen.

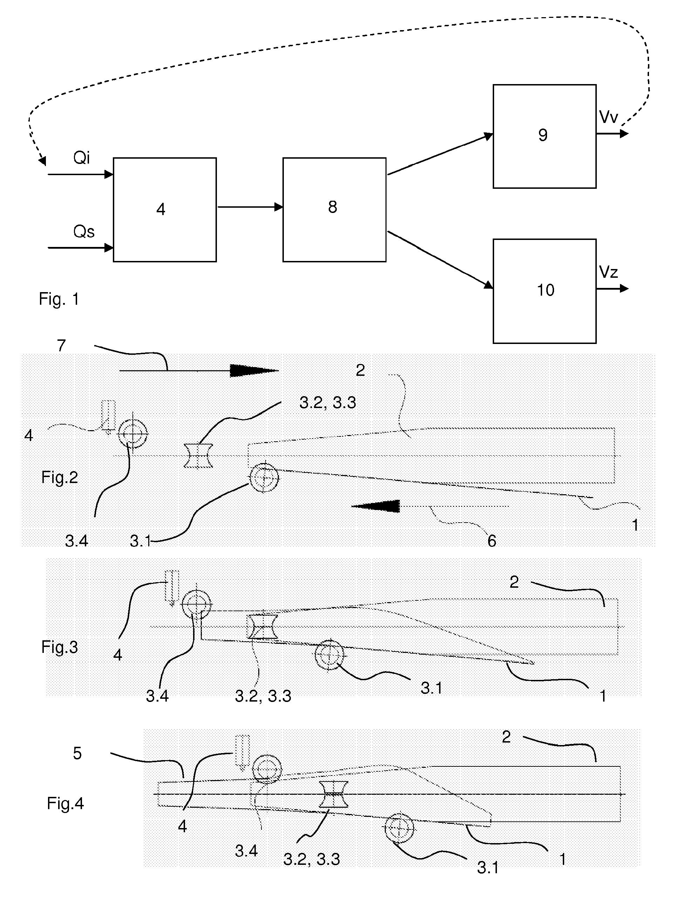

**Figur 1** zeigt ein Blockschaltbild einer Steuerung einer Vorrichtung zum Formen von Hohlprofilen. Eine Steuereinheit 8 steuert bzw. regelt eine Vorschubeinheit 9 bzw. deren Vorschubgeschwindigkeit Vᵥ , die dem Vorschub eines Blechstreifens 1 (nicht gezeigt) dient. In Abhängigkeit von der Vorschubgeschwindigkeit Vᵥ steuert die Steuereinheit 8 einen Formkopf 10 zum Formen eines Hohlprofils 5 (nicht gezeigt) bzw. dessen Zustellgeschwindigkeit V_{z} entlang eines nicht gezeigten Formkörpers 2. Um beispielsweise ein konisches Hohlprofil 5 mittels eines abschnittsweise konischen Formkörpers 2 zu erzeugen, ist der Zusammenhang zwischen der Zustellgeschwindigkeit V_{z} und der Vorschubgeschwindigkeit Vᵥ linear. Zur Fertigstellung des Hohlprofils 5 werden die nach dem Biegen aneinander anliegenden Ränder des Blechstreifens 1 von einem Schweißgerät 5, in diesem Fall einem Laserschweißgerät, miteinander verschweißt. Das Schweißgerät 4 überwacht dabei eine Istqualität Qᵢ der Schweißnaht, beispielsweise mittels am Markt verfügbarer optischer Einrichtungen zur Schweißnahtverfolgung oder über einen Schweißstrom. Die Istqualität Qᵢ der Schweißnaht kann mit der Vorschubgeschwindigkeit Vᵥ beeinflusst werden, wie durch den gestrichelten Pfeil angedeutet ist. Die Abweichung von einer vorgegebenen Sollqualität Qₛ wird der Steuereinheit zugeführt, die daraufhin die Vorschubgeschwindigkeit Vᵥ des Blechstreifens 1 und damit auch die Zustellgeschwindigkeit V_{z} des Formkopfes 10 entsprechend anpasst. Eine abnehmende Istqualität Qᵢ ist dabei mit einer verringerten Vorschubgeschwindigkeit Vᵥ kompensierbar. Ebenso kann die Vorschubgeschwindigkeit Vᵥ erhöht werden, so lange die Istqualität Qᵢ dies zulässt.

**Figur 2** zeigt eine schematische Teilansicht einer Vorrichtung zum Formen von Hohlprofilen mit einem Blechstreifen 1 im ersten Stadium eines Formvorganges. Die Vorrichtung umfasst einen Formkörper 2, der im dargestellten Ausführungsbeispiel einen konischen Bereich und einen zylindrischen Bereich aufweist. Die Umformung des Blechstreifens 1 findet weitgehend im konischen Bereich statt. Ein Formkopf 10, der den Formkörper 2 abschnittsweise umgreift, ist der besseren Anschaulichkeit halber nicht als ganzes dargestellt. Stattdessen sind nur seine wesentlichsten Komponenten, die Formrollen 3.1 bis 3.4 gezeigt, die ein konkaves Profil aufweisen, dessen Radius einem kleinsten Radius des Formkörpers an einem Ende seines konischem Bereiches entspricht. Die Größenverhältnisse sind der besseren Anschaulichkeit halber nichtmaßstäblich. Insbesondere ist der Abstand zwischen den Formrollen 3.1 bis 3.4 groß im Vergleich zum konischen Bereich des Formkörpers dargestellt. Die Formrollen 3.1 bis 3.4 sind jeweils um eine tangential zum Formkörper 2 liegende Achse drehbar gelagert. Die Achse der Formrolle 3.1 liegt in einer ersten Ebene, die Achsen der Formrollen 3.2 und 3.3 (nicht sichtbar, da durch 3.2 verdeckt) in einer zweiten, von der ersten Ebene beabstandeten Ebene und die Achse der Formrolle 3.4 in einer dritte Ebene. Ein Schweißgerät 4, speziell ein Laserschweißgerät, ist ebenfalls in den Formkopf 10 integriert. Der Blechstreifen 1 wird von einer nicht gezeigten Vorschubeinheit 9 in einer Vorschubrichtung 6 entlang einer unteren Mantellinie im konischen Bereich des Formkörpers 2 geführt. Die unterhalb des Formkörpers an diesem entlang laufende Formrolle 3.1 erfasst den Blechstreifen 1 zuerst und biegt ihn aufgrund ihrer konkaven Profilform und einer auf sie in Richtung des Formkörpers 2 wirkenden Kraft teilweise um den Formkörper 2 herum. Der Formkopf 10 mit den Formrollen bewegt sich dabei nach rechts, also der Vorschubrichtung 6 des Blechstreifens 1 entgegen in einer Zustellrichtung 7. Im gezeigten Ausführungsbeispiel hängt die Zustellgeschwindigkeit V_{z} des Formkopfes 10 linear von der Vorschubgeschwindigkeit Vᵥ des Blechstreifens ab.

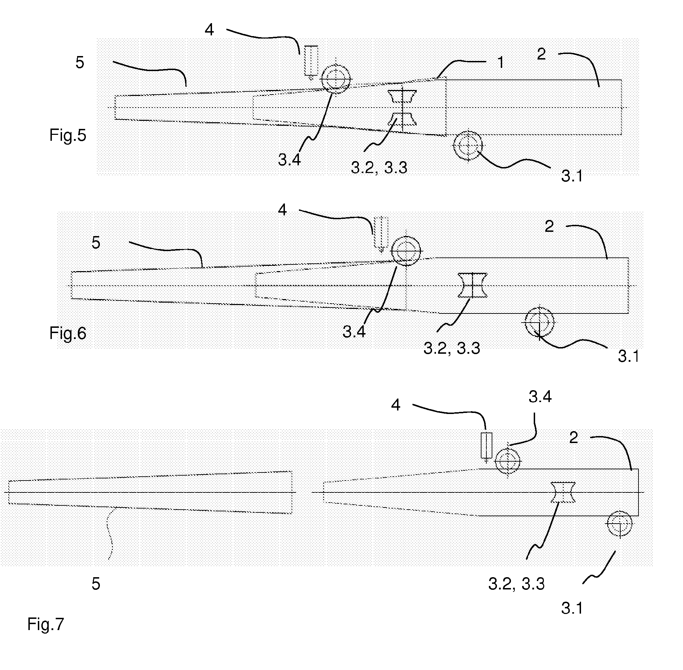

In **Figur 3** befindet sich die Vorrichtung zum Formen von Hohlprofilen im zweiten Stadium des Formvorganges. Der Blechstreifen 1 ist bereits weiter vorgeschoben und der Formkopf 10 entsprechend weiter nach rechts bewegt worden. Die Formrolle 3.1 befindet sich bereits in einem Abschnitt des Formkörpers, dessen Radius größer als der kleinste Radius ist. Die Formrolle 3.2, die am Umfang des Formkörpers 90 ° versetzt zur Formrolle 3.1 angeordnet ist und die durch die Formrolle 3.2 verdeckte, weil gegenüberliegende Formrolle 3.3 befinden sich jetzt im Abschnitt des geringsten Radius des Formkörpers und biegen den bereits durch die Formrolle 3.1 vorgebogenen Blechstreifen 1 in gleicher Weise weiter um den Formkörper 2 herum. Die Formrolle 3.1 ist, wie die anderen Formrollen 3.2 bis 3.4, entlang einer halbierenden Querschnittsebene in zwei Rollenteile geteilt, die axial zueinander verschiebbar sind. Dem sich vergrößernden Radius des Formkörpers 2 folgend und sich so seiner Querschnittsform anpassend bewegen sich die Rollenteile auseinander. Die Situation wird in dieser Ansicht nicht deutlich, die Rollenteile verhalten sich jedoch sinngemäß wie die Rollenteile der Formrollen 3.2, 3.3 in den folgenden Figuren 4 und 5. Diese axiale Bewegung der Rollenteile erfolgt bevorzugt entgegen einer Federkraft, die bestrebt ist, die Rollenteile zusammenzudrücken. Alternativ ist auch ein aktiver Antrieb der Rollenteile in Axialrichtung denkbar. Es kann eine andere Anzahl Rollenteile pro Formrolle 3 vorgesehen sein.

In **Figur 4** befindet sich die Vorrichtung zum Formen von Hohlprofilen im dritten Stadium des Formvorganges. Der Blechstreifen 1 ist weiter nach links vorgeschoben und der Formkopf 10 entsprechend weiter nach rechts bewegt worden. Die Rollenteile der Formrollen 3.2 und 3.3 bewegen sich bereits axial entgegen der Federkraft auseinander und passen sich dem sich vergrößernden Radius des Formkörpers an. Die Formrolle 3.4 vollendet den Biegevorgang am bereits weit um den Formkörper 2 herum gebogenen Blechstreifen 1, so dass er danach bereits die Form des Hohlprofils 5 aufweist. Das Schweißgerät 4 verschweißt die nun aneinander anliegenden Kanten des Blechstreifens 1 miteinander und schließt den Umformvorgang für den bereits fertig gebogenen Teil des Hohlprofils 5 ab. Das Schweißgerät 4 überwacht dabei die Istqualität Qᵢ der Schweißnaht, beispielsweise mittels am Markt verfügbarer optischer Einrichtungen zur Schweißnahtverfolgung oder über einen Schweißstrom. Bei Abweichung von einer vorgegebenen Sollqualität Qₛ wird die Vorschubgeschwindigkeit Vᵥ des Blechstreifens 1 entsprechend angepasst. Hierzu kann eine nichtgezeigte Steuereinheit 8 vorgesehen sein.

In **Figur 5** befindet sich die Vorrichtung zum Formen von Hohlprofilen im vierten Stadium des Formvorganges. Der Blechstreifen 1 ist weiter nach links vorgeschoben und der Formkopf 10 entsprechend weiter nach rechts bewegt worden. Der Blechstreifen 1 ist bereits zu einem großen Teil fertig gebogen. Der restliche Teil befindet sich vollständig im konischen Bereich des Formkörpers 1. Die Formrolle 3.1 ist bereits im zylindrischen Bereich des Formkörpers 2 und hat keinen Kontakt mehr mit dem Blechstreifen 1. Die Rollenteile der Formrollen 3.2 und 3.3 sind dem sich vergrößernden Radius des konischen Bereiches des Formkörpers 2 folgend weiter auseinander gerückt. Bei der Formrolle 3.4 setzt dieser Vorgang ebenso ein.

In **Figur 6** befindet sich die Vorrichtung zum Formen von Hohlprofilen im fünften Stadium des Formvorganges. Der Blechstreifen 1 ist fast vollständig zum Hohlprofil 5 umgeformt. Die Formrolle 3.4 biegt in der Nähe des Überganges vom konischen auf den zylindrischen Teil des Formkörpers das letzte Stück des Blechstreifens 1 um den Formkörper 2 herum. Das Schweißgerät 4 beendet anschließend den Schweißvorgang.

**Figur 7** zeigt links das fertige Hohlprofil 5, rechts den Formkörper 2 und die Formrollen mit dem Schweißgerät, die eine Endposition im zylindrischen Bereich des Formkörpers 2 erreicht haben. Um einen erneuten Formvorgang zu beginnen, muss der Formkopf 10 mit seinen Komponenten zunächst wieder in die in Figur 2 gezeigte Position verschoben werden. Die Abbildung macht die unterschiedliche Konizität des Hohlprofils 5 und des konischen Bereiches des Formkörpers 2 deutlich, die durch die gleichzeitige Bewegung des Formkopfes 10 mit dem Vorschub des Blechstreifens 1 und die dazwischen bestehende lineare Abhängigkeit erreicht wird.

Der Formkörper 2 kann eine Form aufweisen, die von der beschriebenen konischen bzw. zylindrischen Form abweicht. Beispielsweise kann der er in dem Bereich, in dem die Umformung stattfindet, die Form eines Stumpfes einer Pyramide mit vier, sechs, acht oder einer anderen Anzahl von Seiten aufweisen. Der übrige Bereich könnte dann beispielsweise die Form eines Prismas mit der gleichen Anzahl Seiten aufweisen. Möglich ist auch eine nichtlineare Verjüngung des Bereiches, in dem die Umformung stattfindet.

Die Formrollen 3.1 bis 3.4 können eine von der konkaven Form abweichende Profilform aufweisen. Es kann eine andere Anzahl von Formrollen 3 vorgesehen sein.

Das Schweißgerät 4 kann eine vom Formkopf 10 unabhängige Einheit sein. Alternativ zum Laserschweißgerät ist auch die Verwendung eines anderen Schweißgerätes 4 möglich. Das Schweißgerät 4 kann an einer anderen Stelle des Umfangs des Hohlprofils 5 angeordnet sein, insbesondere seitlich oder unten. Die Zuführung des Blechstreifens 1 erfolgt in diesem Fall von der Seite oder von oben.

Ein nichtlinearer Zusammenhang zwischen der Zustellgeschwindigkeit V_{z} des Formkopfes 10 und der Vorschubgeschwindigkeit Vᵥ des Blechstreifens 1 ist möglich, insbesondere zur Erzeugung nichtkonischer Profilformen.

Der Vorschub des Blechstreifens 1 bzw. das bereits gebogene Hohlprofil 5 kann im Bereich des Formkopfes 10 unterstützt sein. Hierzu können die Formrollen 3.1 bis 3.4 aus einem Material mit einem erhöhtem Haftreibungskoeffizienten gefertigt oder mit einem solchen beschichtet sein. Die Formrollen 3.1 bis 3.4 währen in diesem Fall angetrieben. Der Formkörper 2 weist dabei vorzugsweise einen geringen Haftreibungskoeffizienten auf, beispielsweise durch eine polierte Oberfläche. Alternativ kann eine zusätzliche Antriebseinheit vorgesehen sein.

Die gezeigte Ausführungsform erfordert den Einsatz eines entsprechend der gewünschten Form des Hohlprofils 5 zugeschnittenen Blechstreifens 1. Um unabhängig von der gewünschten Form einen gleichförmig breiten Blechstreifen, z.B. Rollenmaterial, verwenden zu können, kann zwischen der letzen Formrolle 3.4 und dem Schweißgerät 4 eine Schneidvorrichtung vorgesehen sein, die nach dem Biegevorgang überschüssiges Blech abschneidet, bevor die Kanten des Blechstreifens 1 verschweißt werden.

Im gezeigten Ausführungsbeispiel ist der Formkörper 2 fixiert und der Formkopf 10 verschiebbar. Alternativ oder zusätzlich zur Bewegung des Formkopfes 10 kann auch der Formkörper 2 beweglich angeordnet sein. In diesem Fall kann eine Relativbewegung des Formkopfes 10 gegenüber dem Formkörper 2 abhängig von der Vorschubgeschwindigkeit Vᵥ des Blechstreifens 1 sein.

### BEZUGSZEICHENLISTE

- 1: Blechstreifen
- 2: Formkörper
- 3: Formrolle
- 4: Schweißgerät
- 5: Hohlprofil
- 6: Vorschubrichtung
- 7: Zustellrichtung
- 8: Steuereinheit
- 9: Vorschubeinheit
- 10: Formkopf
- Qᵢ: Istqualität
- Qₛ: Sollqualität
- Vᵥ: Vorschubgeschwindigkeit
- V_{z}: Zustellgeschwindigkeit

## Patentansprüche

1. Vorrichtung zum Formen von Hohlprofilen (5), umfassend ein Formwerkzeug, das einen länglichen Formkörper (2), dessen Querschnittsfläche und/oder Querschnittsform entlang einer Längsachse variiert und einen einen Abschnitt des Formkörpers (2) umgreifenden Formkopf (10) mit mindestens zwei Formrollen (3) zum Biegen eines entlang einer Mantellinie des Formkörpers (2) zuführbaren Blechstreifens (1) um den Formkörper (2) aufweist, wobei der Formkopf (10) und/oder der Formkörper (2) so beweglich ausgebildet sind, dass eine Relativbewegung des Formkopfes (10) in Richtung der Längsachse ausführbar ist und wobei die Formrollen (3) jeweils eine tangential zum Formkörper (2) liegende Achse aufweisen, deren Abstand zur Längsachse entsprechend der Querschnittsfläche und/oder Querschnittsform des Abschnittes des Formkörpers (2), den der Formkopf (10) umgreift, veränderlich ist, und wobei die Formrollen (3) jeweils eine Kraft in Richtung zum Formkörper (2) ausüben, weiter umfassend eine Vorschubeinheit (9) zum Vorschub des Blechstreifens (1) und ein den Formrollen (3) in Vorschubrichtung (6) des Blechstreifens (1) nachgeordnetes Schweißgerät (4), mit dem die Ränder des gebogenen Blechstreifens (1) verschweißbar sind, wobei das Schweißgerät (4) die dabei entstehende Schweißung überwacht und die Vorschubgeschwindigkeit (Vᵥ) der Vorschubeinheit (9) in Abhängigkeit von der Abweichung zu einer vorgegebenen Sollqualität (Qₛ) steuerbar ist und wobei die Bewegung des Formkopfes (10) und/oder des Formkörpers (2) steuerbar ist.

2. Vorrichtung nach Anspruch 1, **dadurch gekennzeichnet, dass** sich der Querschnitt zumindest eines Bereiches des Formkörpers (2) gleichförmig zu einem Ende des Formkörpers (2) hin verjüngt.

3. Vorrichtung nach einem der Ansprüche 1 oder 2, **dadurch gekennzeichnet, dass** im Formkopf (10) vier Formrollen (3) angeordnet sind.

4. Vorrichtung nach einem der Ansprüche 1 bis 3, **dadurch gekennzeichnet, dass** mindestens zwei voneinander beabstandete Ebenen vorgesehen sind, in denen jeweils mindestens eine Achse einer Formrolle (3) liegt.

5. Vorrichtung nach einem der Ansprüche 1 bis 4, **dadurch gekennzeichnet, dass** die Formrollen (3) ein konkaves Profil aufweisen.

6. Vorrichtung nach Anspruch 5, **dadurch gekennzeichnet, dass** der Radius des konkaven Profils annähernd dem kleinsten Radius des Formkörpers (2) gleich ist.

7. Vorrichtung nach einem der Ansprüche 1 bis 6, **dadurch gekennzeichnet, dass** die Formrollen (3) jeweils aus mindestens zwei Rollenteilen bestehen, die eine Form aufweisen, wie sie sich beim Querschneiden einer einteiligen Formrolle (3) ergeben würde und dass die Rollenteile axial zueinander beweglich sind.

8. Vorrichtung nach Anspruch 7, **dadurch gekennzeichnet, dass** die Rollenteile mittels Federkraft axial gegeneinander vorgespannt sind.

9. Vorrichtung nach Anspruch 7, **dadurch gekennzeichnet, dass** die Rollenteile aktiv beweglich sind.

10. Vorrichtung nach einem der Ansprüche 1 bis 9, **dadurch gekennzeichnet, dass** das Schweißgerät (4) oberhalb des gebogenen Blechstreifens (1) angeordnet ist und dass der Blechstreifen (1) unterhalb des Formkörpers (2) zuführbar ist.

11. Vorrichtung nach einem der Ansprüche 1 bis 11, **dadurch gekennzeichnet, dass** in Vorschubrichtung (6) vor dem Schweißgerät (4) eine Schneidvorrichtung angeordnet ist, die überschüssiges Blech abschneidet.

12. Vorrichtung nach einem der vorhergehenden Ansprüche, **dadurch gekennzeichnet, dass** zumindest eine der Formrollen (3) angetrieben ist.

13. Vorrichtung nach einem der vorhergehenden Ansprüche, **dadurch gekennzeichnet, dass** eine Steuereinheit (8) vorgesehen ist, die die relative Zustellgeschwindigkeit (V_{z}) des Formkopfes (10) zum Formkörper (2) als Funktion der Vorschubgeschwindigkeit (Vᵥ) und/oder der Zeit steuert.

14. Vorrichtung nach einem der Ans vorhergehenden Ansprüche, **dadurch gekennzeichnet, dass** der Formkopf (10) auf dem Formkörper (2) selbstzentrierend ausgeführt ist.
